# EUROPEAN PATENT SPECIFICATION

(11) **EP 2 115 529 B1**
(45) Date of publication and mention of the grant of the patent: **18.04.2012**
(21) Application number: 08751464.2
(22) Date of filing: 05.02.2008
(51) Int. Cl.: G02C 11/04

(54) **SPECTACLES WITH LIGHT SOURCES FOR ILLUMINATING AN OBJECT OBSERVED THROUGH THE LENS AND RELATED EARPIECES**
BRILLEN MIT LICHTQUELLEN ZUR BELEUCHTUNG EINES DURCH DAS BRILLENGLAS BETRACHTETEN OBJEKTS UND ENTSPRECHENDE BÜGEL
LUNETTES AVEC SOURCES DE LUMIÈRE POUR ÉCLAIRER UN OBJET OBSERVÉ À TRAVERS LES VERRES ET BRANCHES APPARENTÉES

(43) Date of publication of application: 11.11.2009
(73) Proprietor: Cozzani, Laura Maria, 22040 Alzate Brianza (IT)
(72) Inventor: Cozzani, Laura Maria, 22040 Alzate Brianza (IT)
(74) Representative: Pellegri, Alberto
(86) International application number: PCT/IT2008/000069
(87) International publication number: WO 2009/098719

(56) References cited:
- WO-A-2007/008062
- DE-A1- 10 117 446
- DE-A1-102006 015 334
- GB-A- 2 127 254
- US-A- 3 883 701
- US-A1- 2007 046 887
- US-A1- 2007 200 998

## Description

The present invention relates in general to spectacles with light sources for illuminating an object observed through the lens and in particular to earpieces of a spectacles frame incorporating a lighting device.

Endowing common spectacles of battery powered devices for illuminating an object observed through the lens is a practice that has been proposed and developed for a long time and that benefits from the availability of efficient LED type (acronym for Light Emitting Diode) light sources, which beside a high conversion efficiency of electrical energy to a light energy have far smaller sizes compared to the size of a classic miniature lamp. This is documented by the wealth of publications that describe different approaches and solutions to the problem of making spectacles frame with built in light sources.

CN 20061032873 discloses spectacles with LED incorporated in the front frame and in the earpieces.

CN 2906672YY discloses spectacles with LEDs incorporated in the front frame with earpieces, a part of which hinged to the front mask is hollow and accommodates a LED and related electrical hardware including a slider switch. The other part of the earpiece that plugs into the first part contains a powering battery.

GB-2411009 discloses spectacles with lighting LEDs installed at the front end of the earpieces as well as on the central bridge piece of the front frame of the spectacle. The earpieces contain a battery and a switch for turning on /off the LEDs and a jack or inductor coil for recharging the battery.

US-2003-086053 discloses lighting LED modules that may be mounted onto the earpieces of the spectacles.

WO 2007/008062 A1 discloses spectacles with light sources. A button type powering battery is introduced inside a slot cavity defined within the thickness of the earpiece that also includes a slider switch for turning on and off the battery powered LED. The LED are installed at the front end of the earpieces or in the front mask of the spectacles, in the latter case by realizing isolated sliding contacts within the connecting hinge.

These proposal and approaches have so far not been favored by the market because of a persistently poor ergonomicity and because the inevitable additional weight of the powering battery, being them rechargeable or primary batteries, of the LED and of the relative switches and other components of the electrical circuit makes tiresome to wear the spectacles for a long period of time because the increased weight bears for a substantial part of it on the nose of the bearer.

The miniaturized slider switches that is normally incorporated in the earpiece is difficult to locate and operate by relying on tactile sense while wearing the spectacles. The enlarging of the earpieces as far as necessary to accommodate the powering battery, the switch and the electrical hardware and connecting wing to the front LED, makes the general aspect of the worn eyeglasses not so pleasant. Fabrication of the earpieces and the realization at their interior of the electrical powering circuit of one or more LEDs is according to the known approaches rather laborious and costly.

It is a first object of the present invention to provide spectacles integrating light sources for illuminating an object observed through the lens with enhanced ergonomic characteristics and practicalness of use.

It is a further objective of this invention to provide spectacle earpieces integrating a light source and related powering circuit though preserving for the front and proximal part of their extension the aspect of common earpieces even of particularly slender cross section.

According to a first aspect of the present invention, a single light source is incorporated or mounted at the front end of the earpiece while the powering battery of the light source and a switch are accommodated in a terminal distal portion of the earpiece, substantially beyond the point of rest of the earpiece on the ear of the wearer of the spectacles, of enlarged cross section compared to the cross section of the front and proximal part of the earpiece. The extra weight of the powering module is born mainly by the ears, practically relieving from it the more sensible nose of the bearer.

According to another aspect of the present invention, turning on and off the light source is effected through a switch, the control stem of which projects from the end surface of the earpiece, to be immediately felt by the finger of the bearer and easily operated.

A further aspect of the present invention consists in that the connecting wires of the frontally installed light source to the electrical powering circuit components housed at the farther or distal end of the earpiece, run inside part of the earpiece having a box-like hollow structure composed by two channel cross section elements or semi-earpiece joined together.

The invention is defined in the annexed claims.
**Figure 1** is a photographic rendering of an earpiece for spectacles integrating a light source of the present invention.
**Figure 2** is an exploded view of an earpiece according to first exemplary embodiment.
**Figures 3 and 4** are views showing respectively the two channel cross section semi-earpieces that compose the front and proximal part of the earpiece of Figure 2, coupled to a distal cartridge-shaped part of the earpiece containing the electrical powering devices.
**Figure 5** shows enlarged details of the earpiece of the preceding figures.
**Figure 6** is a schematic view of an earpiece made according to an alternative exemplary embodiment.
**Figure 7** shows the other side of the earpiece of the Figure 6.
**Figure 8** is an exploded view showing the way electrical contacts between a separable powering module and a two-wire connecting line to the front light source are established.
**Figure 9** is an electrical diagram of the circuit incorporated in the earpiece of Figures 6-8.
**Figures 10 and 11** are photographic renderings of a pair of spectacles with earpieces of Figures 1-5.
Figure from 1 to 5 illustrate a first exemplary embodiment of an earpiece for spectacles integrating a light source according to the present invention.

According to this first embodiment, the front and a proximal part of the earpiece 1 has a box-like structure resulting by joining channel cross section relatively slender semi-earpieces 2 and 3 and a distal part 4 of enlarged cross section compared to the front and proximal part of the earpiece.

From the external surface of the semi-earpiece 3 extends, in the example shown, a holed wing 5 which will eventually be engaged in a common fastening hinge of the earpiece to a front frame of the spectacles (not depicted in the Figure).

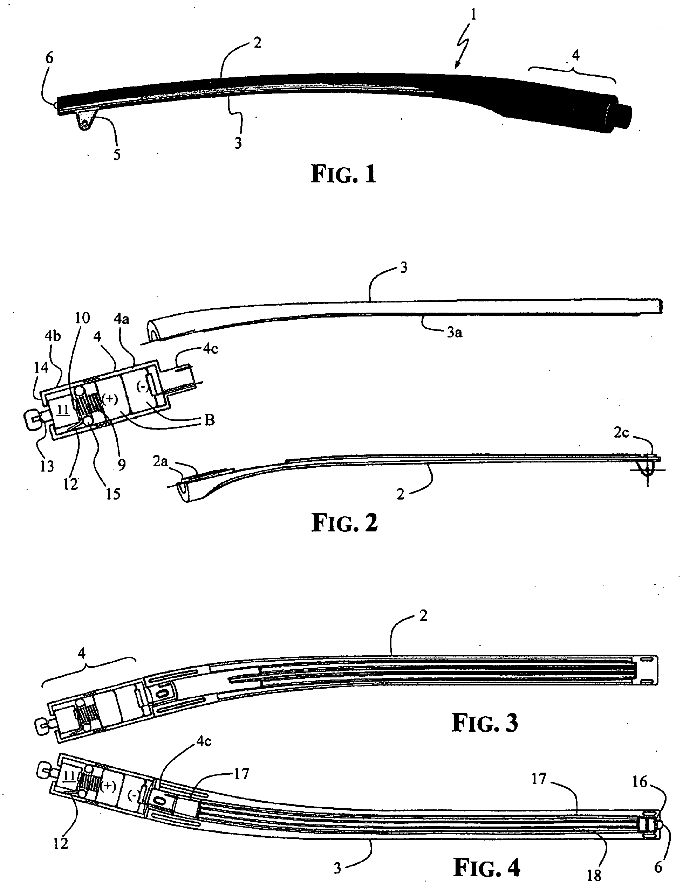

A light source is accommodated and retained in a front end recess defined by coupling together two channel-cross section semi-earpieces 2 and 3. Of the light source, typically a LED, in Figure 1 is observable only the terminal lens 6.

In the exploded view of Figure 2, the two channel cross section semi-earpieces 2 and 3 may be better observed and so is the geometry of the coupling perimeters provided with moldings 2a and 2b and 2c that are destined to engage themselves in specularly formed channels or recesses formed along the coupling perimeter of the other semi-earpiece 3, which has a median longitudinal stiffening rib 3a the crest molding of which engages in a corresponding longitudinal recess formed along the crest of a corresponding longitudinal median rib formed in the first semi-earpiece 2, such that upon coupling together the two pieces, the inner space of the so-defined box-like structure is longitudinally divided, for a good portion of the length of the earpiece, in two distinct channels. Moreover, the median longitudinal ribs present along both channel cross section semi-earpieces 2 and 3 confer to the resulting hollow body an enhanced rigidity.

As may be observed, the distal end portion of the two semi-earpieces 2 and 3 is shaped such to confer to the distal end of this part of the earpiece of box-like structure a cross section that gradually increases as far as matching without any substantial discontinuity the enlarged cylindrical cross section of the distal part of the earpiece 4 which, in the illustrated example, comprises a cylindrical cartridge of aluminum or other light weight electrically conducting metallic material composed by telescopically screwing together two parts: respectfully a coupling end part 4a and an end or closing part 4b.

The coupling end part 4a has a central tail 4c transversed by a hole 7 for receiving a blocking pin passed across the tailed portion 4c, after having introduced it inside an end receptacle defined by the two semi-earpieces 2 and 3 joined together and at least the wall of one or of both the two semi-earpieces, according to common assembling practices.

The cartridge 4 contains at least one, in the depicted example two, button type batteries B in series held by a metal spring 9 that establishes also the electrical connection between the positive terminal (+) of the series of two batteries B to a first lead 10 of a push-button switch 11, a second lead 12 of which is bent in order to establishing electrical contact with the metal cartridge 4 itself. The control stem 13 of the switch emerges through an opening of the end face 14 of the distal cartridge part 4 of the earpiece 1.

A common O-ring 15 stops and sustains in position the switch 11.

Figures 3 and 4 show the end cartridge 4 respectfully associated to one and to the other of the two semi-earpieces 2 and 3 that compose the box-like front and proximal part of the earpiece.

In Figure 4 that shows the terminal cartridge 4 and the semi-earpiece 3 may be observed the front end LED 16, held between the tongued ends of the two semi-earpieces, and the pair of connecting wires respectively running in the two channels defined in the interior of the box-like structure of the earpiece. The wire 17 connects the respective lead of the LED 16 to the metallic bulk of the cylindrical cartridge 4 that is short circuited through the switch 11 to the positive pole of the series of two button batteries B by the bent lead 12. The other wire 18, optionally provided with an isolating sleeve, passes through a longitudinal hole purposely formed in the tail 4c and establish an electric contact with the negative pole of the series of batteries B.

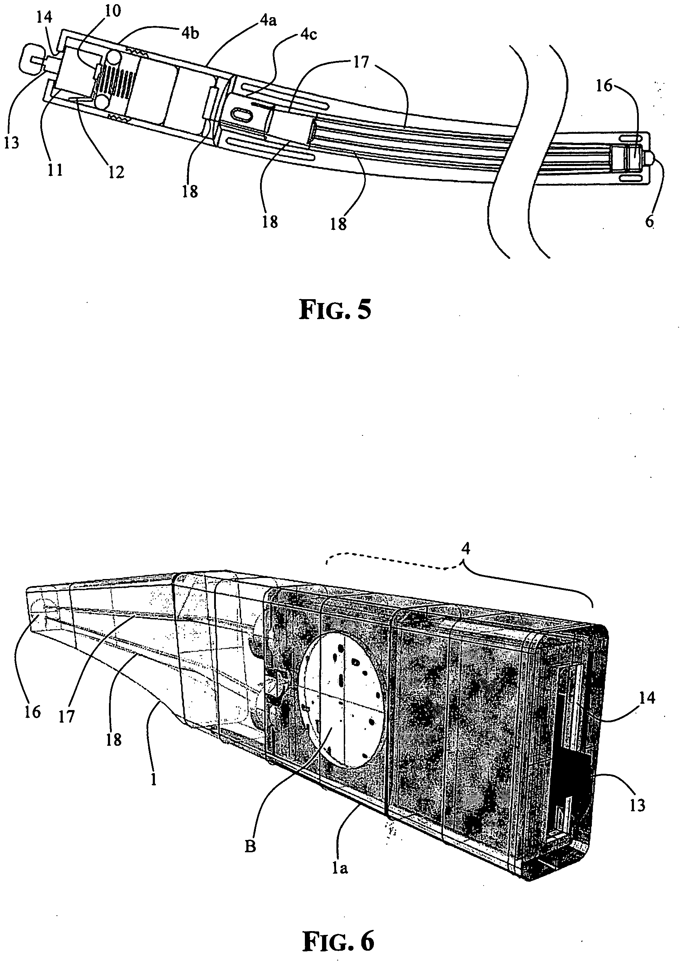

Details of the electrical paths may be better observed in the enlarged view of Figure 5.

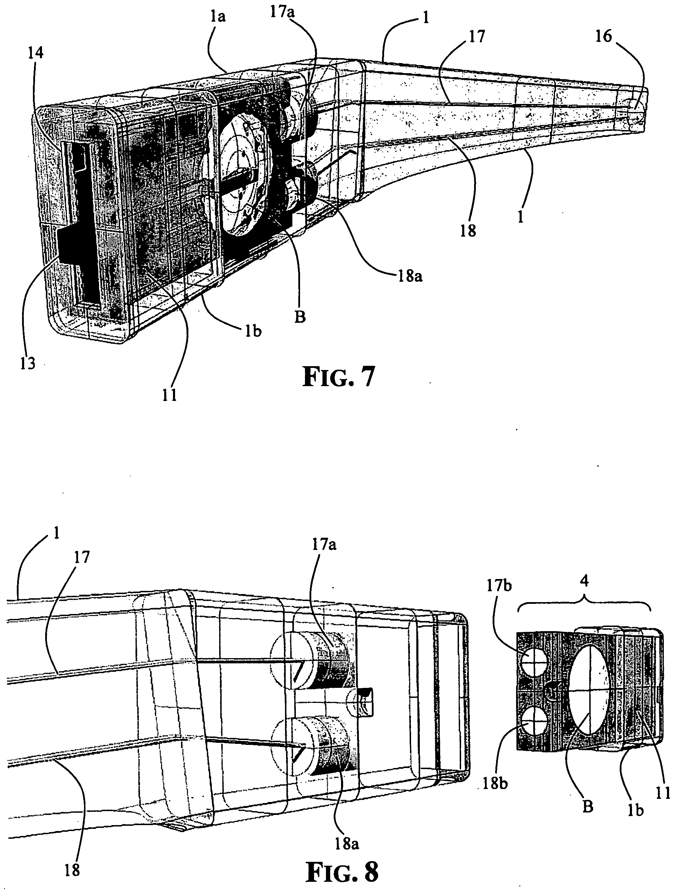

Figures 6, 7 and 8 are schematic views in transparency of an earpiece of the present invention according to an alternative embodiment employing a single button battery B and a switch 11 of the so-called slider type instead of a push button switch of the prior embodiment and further implementing a different way of establishing the electrical connection between the powering and control elements contained at the free or distal end of the earpiece and a LED incorporated at the front end of the earpiece.

According to this alternative embodiment, the earpiece 1 of thermoplastic material may be formed in a mold in a substantially "monolithic" form, such to incorporate in the molded resin the front LED (which of course will only be partially encapsulated in the molded resin), a pair of conducting wires 17 and 18 for the powering of the LED 16 and two semi contacts 17a and 18a, to which the ends of the two wires 17 and 18 are connected. The semi contacts 17a and 18a are partially embedded in the resin at the bottom of the cavity of a hollow portion of enlarged cross section 1a of the molded earpiece.

A plug-in part 4 that is eventually inserted in side the cavity of the hollow portion 1a of the molded resin earpiece is a pre-constituted assembly or module, the portion of which that is received into the end cavity of the molded earpiece has on its lead surface two semi contacts 17b and 18b that establish electric contacts with the respective partially embedded terminations 17a and 18a of the pair of conducting wires incorporated in the molded resin. A secure electrical contact between the two pairs of semi contacts 17a-17b and 18a-18b, may be ensured by making the pair of semi contacts 17a and 18a of termination of the respective wires 17 and 18 incorporated in the molded resin of a ferromagnetic metallic material and the pair of semi contacts 17b and 18b with permanent magnets of an electrical conducting material. The magnetic attraction force beside ensuring a stable electrical contact also retains the pre-assembled module 4 once it is pushed fully inside the end cavity of the molded earpiece.

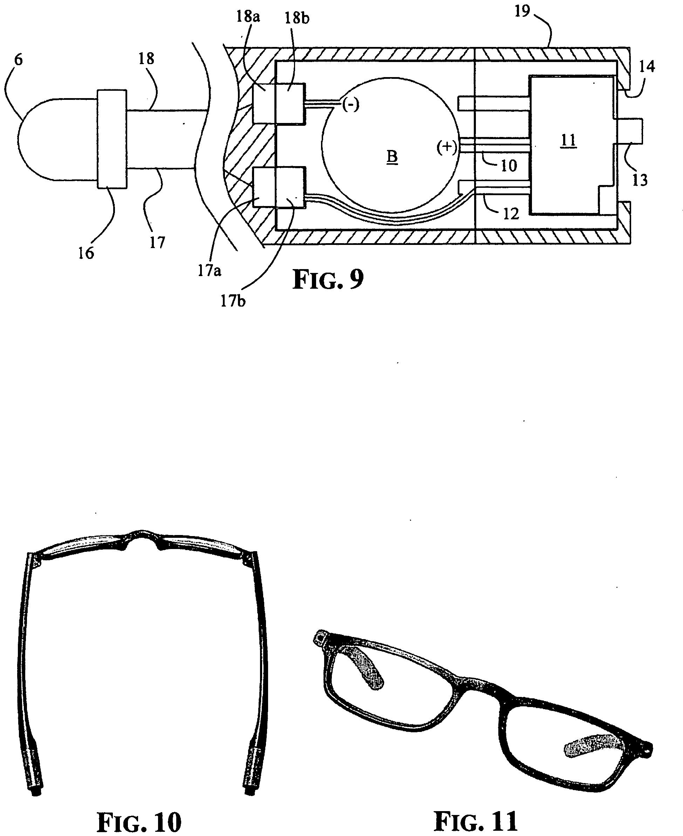

The pre-constituted end module 4 adapted to be at least partly received inside the end cavity of the molded earpiece houses a button battery B, the negative pole (-) of which is connected to the semi-contact 18b. The positive pole (+) is connected to the common lead of a slider switch 11, while the "output" lead 12 of the switch 11 is electrically connected to the semi-contact 17b on the lead surface of the plug-in module 4 pushed inside in the cavity, as shown in Figure 9.

A shell 1b of the same plastic material with which is formed the molded front and proximal part of the earpiece 11 encapsulates the switch 11, the relative connecting leads or pins 10 and 12 and the plastic housing of the battery B and of the semi contacts 17b and 18b, letting protrude through a narrow slot 14 present on the terminal surface of the shell 1b, the control stem 13 of the slider switch 11.

Alternatively, a secure electrical contact between the semi contacts pairs 17a-17b and 18a-18b, may be ensured by making the pair of semi contacts 17b and 18b in the form of mobile metallic buttons with biasing springs, installed in respective cavities of the plastic housing of the battery. In this case, the retention of the module 4 plugged inside the end cavity of the molded front and proximal parts of the earpiece, may be ensured by common snap-action moldings or tonguings that are forcibly engaged exploiting the elastic memory of the cooperating geometric details formed in the molded material of which is made at least one of the two joinable parts, according to common practices of pre-arrangement of lockable features in separable parts of an assembled piece.

Figures 10 and 11 are photographic rendering of spectacles of the present invention employing earpieces according to the embodiment of Figure 1-5.

As will be obvious to an informed reader, the battery or series of batteries used as sources of electrical energy for powering the light source, typically a LED, may be primary batteries, replaceable upon exhaustion, or alternatively they may be rechargeable batteries.

In the latter case, it may be contemplated the presence in the earpiece of a common jack for connection to an external battery charger or an embedded coil (secondary of an air transformer) and relative battery charging circuit powerable in a "contactless" fashion by an external device having a coil (primary of an air transformer) driven at high frequency mutually coupled to the embedded coil, according to common practices of contactless recharging of an embedded rechargeable battery of the earpiece.

## Claims

1. Spectacles comprising light sources (16) for illuminating an object observed through the lens of the spectacles, a front frame, a powering circuit, a battery (B), an on/off switch (11), and earpieces (1) hingedly connected to the front frame, **characterized in that**
each earpiece comprises at its free distal end a pre-constituted detachable module or cartridge (4) of a certain cross sectional size containing said battery (B), said switch (11) and electrical connecting means and having a distal end surface through an opening of which a control stem (13) of the switch (11) projects, and a tail adapted to be received inside a distal cavity of a front and proximal part of the earpiece (1);
a pair of electrical supply wires (17, 18) of at least one light source (16) present at the front end of the earpiece (1), said wires extending inside the front and proximal part of the earpiece, said front and proximal part of the earpiece having a cross section that gradually increases as far as matching the cross section of said detachable module or cartridge (4), the wires being connected to a terminal of said battery and to a terminal of said switch (11) contained in said detachable module or cartridge (4).

2. The spectacles according to claim 1, wherein said front and proximal part of the earpieces (1) has a box-like structure comprising two elements (2, 3) having a channel like cross section joined together for defining at least a conduit inside which runs said pair of electrical supply wires (17, 18) of a LED (16) held at the front end of the earpiece (1), said elements (2, 3) having a cross section which gradually increases as far as matching with the cross section of said detachable module or cartridge (4).

3. The spectacles according to claim 2, wherein said detachable cartridge (4) is metallic and composed by a first half cartridge (4a) having a tail (4c) insertable insaid distal cavity of said box-like front and proximal part of the earpiece formed by two elements (2, 3) joined together, and by a second half cartridge (4b) screwed to said first half cartridge (4a) and having an opening through its end surface (14) through which a control stem (13) of the switch (11) projects.

4. The spectacles according to claim 1, wherein said front and proximal part of the earpiece is made in a monolithic form, defining in a distal part of gradually enlarging cross section, said cavity adapted to receive a pre-constituted module (4) containing said battery (B), said switch (11) and electrical connecting means, partly enveloped by an end shell (1b), through an opening of which the control stem of the switch projects;
said electrical connection means comprising a pair of semi contacts (17b, 18b) adapted to contact respective semi contacts (17a, 18a) of termination of said pair of supply wires (17, 18) of the light source (16), partly embedded, at the bottom of said cavity, in the material of the formed monolithic front and proximal part of the earpiece.

5. The spectacles according to claim 4, wherein the electrical contact between said semi contact pairs (17a, 18a, 17b, 18b) is ensured by biasing springs acting on semi contacts present on the end surface of said plugged-in module (4) that is introduced and blocked inside said cavity.

6. The spectacles according to claim 4, wherein the electrical contact between said semi contact pairs is ensured by making said pair of termination semi contacts (17a, 18a) with a ferromagnetic metallic material and said pair of semi contacts (17b, 18b) present on the end surface of said plugged-in module (4) with two permanent magnets of an electrically conducting material.

7. An earpiece (1) for spectacles comprising a light source (16) at its front end, a battery (B), a switch (11) and electrical connecting means for supplying said light source, **characterized in that** it comprises
a pre-constituted detachable module or cartridge (4) of a certain cross sectional size containing said battery (B), said switch (11) and electrical connecting means and having a distal end surface, through an opening of which a control stem (13) of the switch (11) projects, and a tail adapted to be received inside a distal cavity of a front and proximal part of the earpiece (1);
a pair of electrical supply wires (17, 18) of said light source (16) present at the front end of the earpiece (1), said wires extending inside the front and proximal part of the earpiece, said front and proximal part of the earpiece having a cross section that gradually increases as far as matching the cross section of said detachable module or cartridge (4), said wires being connected to a terminal of said battery and to a terminal of said switch (11) contained in said detachable module or cartridge (4).

8. The earpiece according to claim 7, **characterized in that** said front and proximal part has a box-like structure composed of two elements (2, 3) having a channel-like cross section joined together for defining at least a conduit inside which extend said electrical supply wires (17, 18) of a LED (16) held at the front end.

9. The earpiece according to claim 8, wherein said cartridge is metallic and composed by a first half cartridge having a tail adapted to be inserted inside a distal cavity of said box-like structured part of the earpiece formed by two elements (2, 3) joined together, and by a second half cartridge screwed to said first half cartridge and having an opening through its distal end surface through which a control stem of the switch projects;

10. The earpiece according to claim 7, wherein said front and proximal part of the earpiece (1) is made in a monolithic form, defining in a distal part of gradually enlarging cross section said cavity adapted to receive a pre-constituted module (4) partly enveloped by an end shell (1b), through an opening of which the control stem of the switch projects, containing said battery (B), said switch (11) and electrical connecting means,;
said electrical connection means comprising a pair of semi contacts (17b, 18b) adapted to contact respective semi contacts (17a, 18a) of termination of said pair of supply wires (17, 18) of the light source (16), partly embedded, at the bottom of said cavity, in the material of the formed monolithic front and proximal part of the earpiece (1).

11. The earpiece according to claim 10, wherein electrical contact between said semi contact pairs (17a, 18a, 17b, 18b) is ensured by biasing springs acting on movably held semi contacts (17b, 18b) present at the end of said plugged-in module (4) introduced and blocked inside said cavity.

12. The earpiece according to claim 10, wherein electrical contact between said semi contact pairs (17a, 18a, 17b, 18b) is ensured by making said pair of termination semi contacts (17a, 18a) of a ferromagnetic metallic material and said pair of semi contacts (17b, 18b) present at the end of said plugged-in module (4) with two permanent magnets of an electrically conducting material.

## Patentansprüche

1. Brille, die Lichtquellen (16) zur Beleuchtung eines Objekts, das durch das Brillenglas der Brille betrachtet wird, ein vorderes Brillengestell, eine Versorgungsschaltung, eine Batterie (B), einen Ein-/Aus-Schalter (11) und Bügel (1) aufweist, die mit dem vorderen Brillengestell gelenkig verbunden sind, **dadurch gekennzeichnet, daß**
jeder Bügel an seinem freien distalen Ende ein vorgebildetes abnehmbares Modul oder Einsatz (4) mit einer bestimmten Querschnittsgröße aufweist, das die Batterie (B), den Schalter (11) und elektrische Verbindungsmittel enthält und eine distale Endfläche mit einer Öffnung, aus der ein Bedienungsstift (13) des Schalters (11) vorsteht, und ein Hinterteil aufweist, das eingerichtet ist, in einen distalen Hohlraum eines vorderen und proximalen Teils des Bügels (1) aufgenommen zu werden;
ein elektrisches Versorgungsleitungspaar (17, 18) mindestens einer Lichtquelle (16), die am vorderen Ende des Bügels (1) vorhanden ist, wobei sich die Leitungen innerhalb des vorderen und proximalen Teils des Bügels erstrecken, wobei der vordere und proximale Teil des Bügels einen Querschnitt aufweist, der allmählich zunimmt, bis er dem Querschnitt des abnehmbaren Moduls oder Einsatzes (4) entspricht, wobei die Leitungen mit einem Anschluß der Batterie und einem Anschluß des Schalters (11) verbunden sind, der im abnehmbaren Modul oder Einsatz (4) enthalten ist.

2. Brille nach Anspruch 1, wobei der vordere und proximale Teil der Bügel (1) eine kastenförmige Struktur aufweist, die zwei Elemente (2, 3) mit einem kanalförmigen Querschnitt aufweist, die miteinander verbunden sind, um mindestens einen Leitungskanal zu definieren, innerhalb dessen das elektrische Versorgungsleitungspaar (17, 18) einer LED (16) verläuft, die am vorderen Ende des Bügels (1) gehalten wird, wobei die Elemente (2, 3) einen Querschnitt aufweisen, der allmählich zunimmt, bis er dem Querschnitt des abnehmbaren Moduls oder Einsatzes (4) entspricht.

3. Brille nach Anspruch 2, wobei der abnehmbare Einsatz (4) metallisch ist und aus einem ersten Halbeinsatz (4a), der ein Hinterteil (4c) aufweist, das in den distalen Hohlraum des kastenförmigen vorderen und proximalen Teils des Bügels einsetzbar ist, der durch zwei miteinander verbundene Elemente (2, 3) gebildet wird, und aus einem zweiten Halbeinsatz (4b) zusammengesetzt ist, der an den ersten Halbeinsatz (4a) geschraubt ist und eine Öffnung durch seine Endfläche (14) aufweist, durch die ein Bedienungsstift (13) des Schalters (11) vorsteht.

4. Brille nach Anspruch 1, wobei der vordere und proximale Teil des Bügels in einer monolithischen Form hergestellt ist, die in einem distalen Teil mit allmählich zunehmenden Querschnitt den Hohlraum definiert, der eingerichtet ist, ein vorgebildetes Modul (4) aufzunehmen, das die Batterie (B), den Schalter (11) und elektrische Verbindungsmittel enthält, das teilweise durch eine Endhülse (1b) mit einer Öffnung umhüllt ist, durch die ein Bedienungsstift des Schalters vorsteht;
wobei die elektrischen Verbindungsmittel ein Halbkontaktpaar (17b, 18b) aufweisen, das eingerichtet ist, jeweilige Anschlußhalbkontakte (17a, 18a) des Versorgungsleitungspaars (17, 18) der Lichtquelle (16) zu kontaktieren, das teilweise am Boden des Hohlraums im Material des ausgebildeten monolithischen vorderen und proximalen Teils des Bügels eingelassen ist.

5. Brille nach Anspruch 4, wobei der elektrische Kontakt zwischen den Halbkontaktpaaren (17a, 18a, 17b, 18b) durch Vorspannfedern sichergestellt wird, die auf Halbkontakte wirken, die an der Endfläche des Eingesteckmoduls (4) vorhanden sind, das in den Hohlraum eingeführt und arretiert ist.

6. Brille nach Anspruch 4, wobei der elektrische Kontakt zwischen den Halbkontaktpaaren sichergestellt wird, indem das Anschlußhalbkontaktpaar (17a, 18a) mit einem ferromagnetischen metallischen Material und das an der Endfläche des Eingesteckmoduls (4) vorhandene Halbkontaktpaar (17b, 18b) mit zwei Permanentmagneten aus einem elektrisch leitenden Material hergestellt sind.

7. Bügel (1) für eine Brille, der eine Lichtquelle (16) an seinem vorderen Ende, eine Batterie (B), einen Schalter (11) und elektrische Verbindungsmittel zur Versorgung der Lichtquelle aufweist, **dadurch gekennzeichnet, daß** er aufweist
ein vorgebildetes abnehmbares Modul oder Einsatz (4) mit einer bestimmten Querschnittsgröße, das die Batterie (B), den Schalter (11) und elektrische Verbindungsmittel enthält und eine distale Endfläche mit einer Öffnung, aus der ein Bedienungsstift (13) des Schalters (11) vorsteht, und ein Hinterteil aufweist, das eingerichtet ist, in einen distalen Hohlraum eines vorderen und proximalen Teils des Bügels (1) aufgenommen zu werden;
ein elektrisches Versorgungsleitungspaar (17, 18) der Lichtquelle (16), die am vorderen Ende des Bügels (1) vorhanden ist, wobei sich die Leitungen innerhalb des vorderen und proximalen Teils des Bügels erstrecken, wobei der vordere und proximale Teil des Bügels einen Querschnitt aufweist, der allmählich zunimmt, bis er dem Querschnitt des abnehmbaren Moduls oder Einsatzes (4) entspricht, wobei die Leitungen mit einem Anschluß der Batterie und einem Anschluß des Schalters (11) verbunden sind, der im abnehmbaren Modul oder Einsatz (4) enthalten ist.

8. Bügel nach Anspruch 7, **dadurch gekennzeichnet, daß** der vordere und proximale Teil eine kastenförmige Struktur aufweist, die aus zwei Elementen (2, 3) mit einem kanalförmigen Querschnitt zusammengesetzt ist, die miteinander verbunden sind, um mindestens einen Leitungskanal zu definieren, innerhalb dessen sich die elektrischen Versorgungsleitungen (17, 18) einer LED (16) erstrecken, die am vorderen Ende gehalten wird.

9. Bügel nach Anspruch 8, wobei der Einsatz metallisch ist und aus einem ersten Halbeinsatz mit einem Hinterteil, das eingerichtet ist, in einen distalen Hohlraum des kastenförmig strukturierten Teil des Bügels eingesetzt zu werden, der durch zwei miteinander verbundene Elemente (2, 3) gebildet wird, und aus einem zweiten Halbeinsatz zusammengesetzt ist, der an den ersten Halbeinsatz geschraubt ist und eine Öffnung durch seine distale Endfläche aufweist, durch die ein Bedienungsstift des Schalters vorsteht.

10. Bügel nach Anspruch 7, wobei der vordere und proximale Teil des Bügels (1) in einer monolithischen Form hergestellt ist, die in einem distalen Teil mit allmählich zunehmenden Querschnitt den Hohlraum definiert, der eingerichtet ist, ein vorgebildetes Modul (4) aufzunehmen, das teilweise durch eine Endhülse (1b) mit einer Öffnung umhüllt ist, durch die ein Bedienungsstift des Schalters vorsteht, das die Batterie (B), den Schalter (11) und elektrische Verbindungsmittel enthält;
wobei die elektrischen Verbindungsmittel ein Halbkontaktpaar (17b, 18b) aufweisen, das eingerichtet ist, jeweilige Anschlußhalbkontakte (17a, 18a) des Versorgungsleitungspaars (17, 18) der Lichtquelle (16) zu kontaktieren, das teilweise am Boden des Hohlraums im Material des ausgebildeten monolithischen vorderen und proximalen Teils des Bügels (1) eingelassen ist.

11. Bügel nach Anspruch 10, wobei der elektrische Kontakt zwischen den Halbkontaktpaaren (17a, 18a, 17b, 18b) durch Vorspannfedern sichergestellt wird, die auf beweglich gehaltene Halbkontakte (17b, 18b) wirken, die an der Endfläche des Eingesteckmoduls (4) vorhanden sind, das in den Hohlraum eingeführt und arretiert ist.

12. Bügel nach Anspruch 10, wobei der elektrische Kontakt zwischen den Halbkontaktpaaren (17a, 18a, 17b, 18b) sichergestellt wird, indem das Anschlußhalbkontaktpaar (17a, 18a) mit einem ferromagnetischen metallischen Material und das an der Endfläche des Eingesteckmoduls (4) vorhandene Halbkontaktpaar (17b, 18b) mit zwei Permanentmagneten aus einem elektrisch leitenden Material hergestellt sind.

## Revendications

1. Lunettes comprenant des sources de lumière (16) pour éclairer un objet observé à travers les verres des lunettes, une face de lunettes, un circuit d'alimentation, une batterie (B), et un commutateur marche/arrêt (11), et des branches de lunettes (1) articulées sur la face de lunettes, **caractérisé en ce que** :
chaque branche comprend au niveau de son extrémité distale libre un module ou une cartouche, amovible et préconstitué (4), ayant certaines dimensions de section transversale, contenant la batterie (B), le commutateur (11) et des moyens de connexion électrique et ayant une surface d'extrémité distale ayant une ouverture par laquelle sort une tige de commande (13) de l'interrupteur (11), et une queue adaptée pour être reçue à l'intérieur d'une cavité distale d'une partie avant et proximale de la branche (1) ;
deux fils d'alimentation électrique (17, 18) d'au moins une source de lumière (16) se trouvant au niveau de l'extrémité avant de la branche (1), les fils s'étendant à l'intérieur de la partie avant et proximale de la branche, la partie avant et proximale de la branche ayant une section transversale qui augmente progressivement au fur et à mesure qu'elle se rapproche de la section transversale du module amovible ou cartouche (4), les fils étant connectés à une borne de la batterie et à une borne du commutateur (11) contenu dans le module amovible ou cartouche (4).

2. Lunettes selon la revendication 1, dans lesquelles la partie avant et proximale des branches (1) comporte une structure en forme de boîte comprenant deux éléments (2, 3) ayant une section transversale en forme de canal, joints entre eux pour définir au moins un conduit à l'intérieur duquel passent les deux fils d'alimentation électrique (17, 18) d'une LED (16) maintenue au niveau de l'extrémité avant de la branche (1), lesdits éléments (2, 3) ayant une section transversale qui augmente progressivement au fur et à mesure qu'elle se rapproche de la section transversale du module amovible ou cartouche (4).

3. Lunettes selon la revendication 2, dans lesquelles la cartouche amovible (4) est métallique et est composée d'une première demi-cartouche (4a) ayant une queue (4c) insérable dans la cavité distale de la partie avant et proximale en forme de boîte de la branche formée par deux éléments (2, 3) joints entre eux, et d'une deuxième demi-cartouche (4b) vissée sur la première demi-cartouche (4a) et comportant une ouverture dans sa surface d'extrémité (14) par laquelle sort une tige de commande (13) du commutateur (11).

4. Lunettes selon la revendication 1, dans lesquelles la partie avant et proximale de la branche a une forme monolithique, définissant dans une partie distale de section transversale s'élargissant progressivement, ladite cavité adaptée à recevoir un module préconstitué (4) contenant la batterie (B), le commutateur (11) et des moyens de connexion électrique, partiellement enveloppé d'une coque d'extrémité (1b), ayant une ouverture par laquelle sort la tige de commande du commutateur ;
les moyens de connexion électrique comprenant deux semi-contacts (17b, 18b) adaptés à contacter des semi-contacts respectifs (17a, 18a) de terminaison des deux fils d'alimentation (17, 18) de la source de lumière (16), partiellement intégrés, dans le fond de ladite cavité, dans le matériau de la partie avant et proximale formée de façon monolithique de la branche.

5. Lunettes selon la revendication 4, dans lesquelles le contact électrique entre les deux paires de semi-contacts (17a, 18a, 17b, 18b) est assuré par des ressorts de sollicitation agissant sur des semi-contacts présents sur la surface d'extrémité du module connecté (4) qui est introduit et bloqué dans la cavité.

6. Lunettes selon la revendication 4, dans lesquelles le contact électrique entre les paires de semi-contacts est assuré en réalisant les deux semi-contacts de terminaison (17a, 18a) en un matériau métallique ferromagnétique et en munissant les deux semi-contacts (17b, 18b) présents au niveau de l'extrémité du module connecté (4) de deux aimants permanents en un matériau conducteur électrique.

7. Branche (1) de lunettes comprenant une source de lumière (16) au niveau de son extrémité avant, une batterie (B), un commutateur (11) et des moyens de connexion électrique pour alimenter la source de lumière, **caractérisée en ce qu'**elle comprend :
un module ou cartouche, amovible et préconstitué (4), ayant certaines dimensions de section transversale, contenant ladite batterie (B), le commutateur (11) et les moyens de connexion électrique et ayant une surface d'extrémité distale comportant une ouverture par laquelle sort une tige de commande (13) de l'interrupteur (11), et une queue adaptée pour être reçue à l'intérieur d'une cavité distale d'une partie avant et proximale de la branche (1) ;
deux fils d'alimentation électrique (17, 18) de la source de lumière (16) se trouvant au niveau de l'extrémité avant de la branche (1), les fils s'étendant à l'intérieur de la partie avant et proximale de la branche, la partie avant et proximale de la branche ayant une section transversale qui augmente progressivement au fur et à mesure qu'elle se rapproche de la section transversale du module ou cartouche amovible (4), les fils étant connectés à une borne de la batterie et à une borne du commutateur (11) contenu dans le module ou cartouche amovible (4).

8. Branche de lunettes selon la revendication 7, **caractérisée en ce que** ladite partie avant et proximale comporte une structure en forme de boîte composée de deux éléments (2, 3) ayant une section transversale en forme de canal, joints entre eux pour définir au moins un conduit à l'intérieur duquel passent les fils d'alimentation électrique (17, 18) d'une LED (16) maintenue au niveau de l'extrémité avant.

9. Branche de lunettes selon la revendication 8, dans laquelle la cartouche est métallique et composée d'une première demi-cartouche ayant une queue adaptée à être insérée à l'intérieur d'une cavité distale de la partie à structure en forme de boîte de la branche formée par deux éléments (2, 3) joints entre eux, et d'une deuxième demi-cartouche vissée sur la première demi-cartouche et comportant une ouverture dans sa surface d'extrémité distale par laquelle sort une tige de commande du commutateur.

10. Branche de lunettes selon la revendication 7, dans laquelle ladite partie avant et proximale de la branche (1) est fabriquée avec une forme monolithique, définissant, dans une partie distale de section transversale s'élargissant progressivement, ladite cavité adaptée à recevoir un module préconstitué (4) partiellement enveloppé par une coque d'extrémité (1b), ayant une ouverture par laquelle sort la tige de commande de l'interrupteur, contenant la batterie (B), le commutateur (11) et des moyens de connexion électrique ;
les moyens de connexion électrique comprenant deux semi-contacts (17b, 18b) adaptés à contacter des semi-contacts respectifs (17a, 18a) de terminaison des deux fils d'alimentation (17, 18) de la source de lumière (16), partiellement intégrés, au fond de la cavité, dans le matériau de la partie avant et proximale formée de façon monolithique de la branche (1).

11. Branche de lunettes selon la revendication 10, dans laquelle le contact électrique entre les deux paires de semi-contacts (17a, 18a, 17b, 18b) est assuré par des ressorts de sollicitation agissant sur des semi-contacts maintenus de façon mobile (17b, 18b) présents au niveau de l'extrémité du module connecté (4) introduit et bloqué dans la cavité.

12. Branche de lunettes selon la revendication 10, dans laquelle le contact électrique entre les deux paires de semi-contacts (17a, 18a, 17b, 18b) est assuré en réalisant les deux semi-contacts de terminaison (17a, 18a) en un matériau métallique ferromagnétique et en munissant les deux semi-contacts (17b, 18b) présents au niveau de l'extrémité du module connecté (4) de deux aimants permanents en un matériau conducteur électrique.
